# EUROPEAN PATENT SPECIFICATION

(11) **EP 3 209 730 B1**
(45) Date of publication and mention of the grant of the patent: **08.12.2021**
(21) Application number: 15852562.6
(22) Date of filing: 21.10.2015
(51) Int. Cl.: C08L 75/04, C08G 18/48, C08G 18/54, C08J 9/14, C08G 18/09, C08G 18/16, C08G 18/18, C08G 18/22, C08G 18/42, C08K 5/521, C08G 18/76, C08G 18/40, C08G 101/00

(54) **RIGID POLYURETHANE FOAMS COMPRISING MODIFIED PHENOLIC RESINS ADDITIVES**
POLYURETHANHARTSCHAUMSTOFFE MIT MODIFIZIERTEN PHENOLHARZADDITIVEN
MOUSSES RIGIDES DE POLYURÉTHANE COMPRENANT DES ADDITIFS DE RÉSINES PHÉNOLIQUES MODIFIÉES

(30) Priority: 21.10.2014 US 201462066554 P
(43) Date of publication of application: 30.08.2017
(73) Proprietor: Momentive Performance Materials Inc., Waterford, NY 12188 (US)
(72) Inventor: CHAFFANJON, Pierre, 51377 Leverkusen (DE); SCHRÖTER, Stephan, 45259 Essen (DE)
(74) Representative: Müller-Boré & Partner Patentanwälte PartG mbB
(86) International application number: PCT/US2015/056562
(87) International publication number: WO 2016/064948

(56) References cited:
- EP-A1- 0 609 982
- US-A- 3 497 465
- US-A1- 2012 009 414
- US-B2- 8 436 064
- DATABASE WPI Week 198827 Thomson Scientific, London, GB; AN 1988-185239 XP62948, SAEKI YUKIO; INOUE HISAMITSU: "PRODUCTION OF PHENOL-MODIFIED POLYURETHANE FOAM", & JP S63 120723 A (SUMITOMO DUREZ CO) 25 May 1988 (1988-05-25)
- None

## Description

The present technology relates generally to polyurethane foam compositions and foams made from such compositions. More particularly, the present technology relates to polyurethane foams employing a modified phenolic resin additive.

Rigid polyurethane and polyisocyanurate foams are widely used as insulating materials in the construction industry. These foams display excellent insulation characteristics.

Conventional rigid polyurethane foam, such as may be used in insulating applications, is generally prepared by the reaction of at least one polyol with at least one isocyanate in the presence of suitable catalysts, surfactants, water, and blowing agents. Various compositions have been prepared to improve fire retardancy or curing in foam compositions. However, there remains an opportunity to develop a rigid polyurethane foam that has improved thermal conductivity properties for use in insulating applications. US 3 497 465 A discloses a polyurethane foam composition for the preparation of a polyurethane foam for insulation panels. Said composition contains a mixed ethoxylation/ propoxylation product of a phenol-aldehyde condensation product, a catalyst, a foam stabilizer, a fireproofing agent, p-MDI and a halogenated blowing agent. US 2012/009414 A discloses a polyurethane polyisocyanurate fire-resistant foam which is prepared from a mixture of an aromatic resin-initiated oxypropylene-oxyethylene polyol, catalysts, a foam stabilizer, a fireproofing agent, p-MDI and water and pentane as the blowing agents. JP S63 120723 A discloses a rigid polyurethane polyisocyanurate foam for thermal insulation which is prepared from a mixture of alkoxylated (PO or EO) novolak polyols having free phenol content of <0.9, a catalyst, a foam stabilizer, a fireproofing agent, MDI and a halogenated blowing agent.

The present technology provides a rigid polyurethane foam composition with improved thermal conductivity.
In one aspect, the present technology provides a polyurethane foam composition comprising a polyol or a mixture thereof, an isocyanate, a polyurethane catalyst or a mixture thereof, a surfactant, water, a modified phenolic resin, one or more blowing agents chosen from a physical blowing agent or a mixture thereof, a chemical blowing agent or a mixture thereof, or any combination thereof, optionally a fire retardant additive or a mixture thereof, and optionally other processing additives. The modified phenolic resin is an oxyalkylated phenolic resin in which at least 50 mol % of phenolic hydroxyl groups have been modified to provide the resin with a primary hydroxyl group; and the composition has an isocyanate index of 250 or less. The modified phenolic resin is a phenolic resin modified with an alkylene carbonate.

In one embodiment, there is provided a foam composition according to any of the previous embodiments, wherein the modified phenolic resin has less than 50 mol % of free phenolic hydroxyl groups.

In one embodiment, there is provided a foam composition according to any of the previous embodiments, wherein the modified phenolic resin has less than 25 mol % of free phenolic hydroxyl groups.

In one embodiment, there is provided a foam composition according to any of the previous embodiments, wherein the modified phenolic resin has less than 10 mol % of free phenolic hydroxyl groups.

In one embodiment, there is provided a foam composition according to any of the previous embodiments, wherein 75 mol % or greater of the phenolic hydroxyl groups that have been modified to provide primary hydroxyl groups.

In one embodiment, there is provided a foam composition according to any of the previous embodiments, wherein mol 75 % to mol 100 % of the phenolic hydroxyl groups that have been modified to provide primary hydroxyl groups.

In one embodiment, there is provided a foam composition according to any of the previous embodiments, wherein the modified phenolic resin is chosen from a compound of the formula: 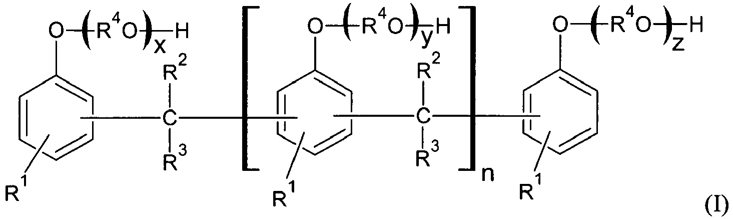 wherein n has an average value of 0.2 to 6;
x, y and z have values from 0 to 25 where x + y + z is greater than 0;
R¹ is independently selected from the group consisting of hydrogen or an alkyl group or a mixture of;
R² and R³ are independently selected from the group consisting of hydrogen and an alkyl group; and
R⁴ is independently chosen from an alkyl group.

In one embodiment, there is provided a foam composition according to any of the previous embodiments, wherein the modified phenolic resin is present in an amount of from 1 weight percent to 25 weight percent based on the total weight of the composition excluding the physical blowing agent.

In one embodiment, there is provided a foam composition according to any of the previous embodiments, wherein the modified phenolic resin is present in an amount of from 3 weight percent to 20 weight percent based on the total weight of the composition.

In one embodiment, there is provided a foam composition according to any of the previous embodiments, wherein the composition has an isocyanate index of 200 or less.

In one embodiment, there is provided a foam composition according to any of the previous embodiments, wherein the composition has an isocyanate index of from 100 to 200.

In one embodiment, there is provided a foam composition according to any of the previous embodiments, wherein the polyol is selected from polyester polyols, polyether polyols, polycarbonate polyols, polythioether polyols, polycaprolactones, brominated polyether polyols, acrylic polyols, or a combination of two or more thereof.

In one embodiment, there is provided a foam composition according to any of the previous embodiments, wherein the catalyst is selected from a gelation catalyst, a blowing catalyst, and a trimerization catalyst.

In one embodiment, there is provided a foam composition according to any of the previous embodiments, comprising (i) a physical blowing agent selected from a pentane isomer, a hydrofluorocarbon, a hydrofluoroolefin, a hydrochlorofluorocarbon, or a combination of two or more thereof; (ii) a chemical blowing agent selected from water, formic acid, or a combination of two or more thereof; or both (i) and (ii).

In one embodiment, there is provided a foam composition according to any of the previous embodiments, wherein the isocyanate composition is selected from an aromatic isocyanate, an aliphatic isocyanate, or any combination thereof.

In one embodiment, there is provided a foam formed from a composition according to any of the previous embodiments, according to any of the previous embodiments, wherein the foam has an initial thermal conductivity of 23 mW/m•K or less at a temperature between 10 °C and 36 °C.

In one embodiment, there is provided a foam formed from a composition according to any of the previous embodiments, wherein the foam has an initial thermal conductivity of 22 mW/m•K or less at a temperature between 10 °C and 36 °C.

In another aspect, the present invention provides an article comprising a foam according to any of the previous embodiments.

In still another aspect the present invention provides a method for forming a polyurethane foam comprising reacting the compostion according to any of the previous embodiments to form a foam.

The present technology provides a foam forming compositions and foams made from such compositions. The compositions may be used to provide rigid foams. The foam compositions comprise: (a) a polyol component; (b) an isocyanate component; (c) a catalyst component; and (d) a modified phenolic resin additive. The use of the present modified phenolic resin additives provides a foam having good properties including, for example, good thermal conductivity.

The present foam compositions comprise a modified phenolic resin additive. The modified phenolic resin comprises an oxyalkylated phenolic resin where one or more of the phenolic hydroxyl groups in the resin have been alkylated. The phenolic resins are modified by alkoxylating the phenolic hydroxyl groups with an alkylene oxide or alkylene carbonate. Examples of suitable alkylene oxides include, but are not limited to, ethylene oxide, propylene oxide, butylene oxide, cyclohexane oxide, etc., or combinations of two or more thereof. Examples of suitable alkylene carbonates include ethylene carbonate, propylene carbonate, butylene carbonate, etc., or combinations of two or more thereof. Also, the phenolic resin may be modified with a combination of alkylene oxides and alkylene carbonates.

The phenolic resin is not particularly limited and may be chosen as desired for a particular purpose or intended application. In one embodiment, the phenolic resin may be a novolac-type resin. Novolac-type resins are generally polyols formed by reaction of a phenol with an aldehyde in the presence of an acid catalyst. Examples of suitable phenols for preparing novolac-type resins include, but are not limited to, phenol, o-cresol, m-cresol, p-cresol, bisphenol A, bisphenol F, bisphenol S, alkylphenols like p-tert. butylphenol, p-tert. amylphenol, p-isopropylphenol, p-tert. octylphenol, nonylphenol, dodecylphenol, p-cumylphenol, xylenols (dimethylphenols), ethylphenols, p-phenylphenol, alpha and beta naphthols, resorcinol, methylresorcinols, cashew nut shell liquid (CNSL) as C 15 alkylphenol, halogenated phenols like p-chlorophenol, o-bromophenol, etc., or combinations of two or more thereof.

Examples of suitable aldehydes for forming novolac-type resins include, but are not limited to, formaldehyde, acetaldehyde, propionaldehyde, butyraldehyde, benzaldehyde, furfuryl aldehyde, glyoxal etc., or combinations of two or more thereof. The preferred aldehyde is formaldehyde. Suitable acid catalysts that may be employed to form a novolac-type resin include, but are not limited to, oxalic acid, p-toluene sulfonic acid, benzene sulfonic acid, hydrochloric acid, sulfuric acid, phenol sulfonic acid, metal salts, mixtures of two or more thereof, etc. Suitable basic catalyst are metal hydroxides, metal carbonates, amines, imidazoles.

In one embodiment, the novolac resin may be the reaction product of bisphenol A and formaldehyde. In another embodiment, the novolac resin may be the reaction product of phenol, cresol, and formaldehyde. In still another embodiment, the novolac polyol may be the reaction product of p-tert-amylphenol and formaldehyde. In other embodiments, the novolac resin may be the reaction product of p-tert-butylphenol, phenol, and formaldehyde, or p-tert-butylphenol, bisphenol A, and formaldehyde.

The novolac-type resin that will be modified may have an average hydroxyl functionality as desired for a particular purpose or intended application. The hydroxyl functionality may be calculated by dividing the number average molecular weight of the novolac polyol by the equivalent weight of the novolac polyol. The number average molecular weight may be determined by gel permeation chromatography while the equivalent weight may be derived from a titrated hydroxyl number. In various embodiments, the novolac-type resin may have an average hydroxyl functionality of from 2 to 40, from 2.5 to 30, from 3 to 20, even from 5 to 15. In one embodiment, the novolac-type resin has an average hydroxyl functionality of from 2.5 to 10, even from 3 to 8.

In one embodiment, the novolac-type resin may have a number average molecular weight from 150 to 5,000 g/mol, from 300 to 4,000 g/mol, from 500 to 3,000 g/mol, from 1,000 to 2,500 g/mol, even from 1,500 to 2,000 g/mol. In one embodiment, the novolac-type resin may have a number average molecular weight from 200 to 1,000 g/mol. Here as elsewhere in the specification and claims, numerical values may be combined to form new and non-disclosed ranges.

In accordance with the present technology, the phenolic resin is modified to a minimum degree. In one embodiment, the phenolic resin is at least 30 % oxyalkylated; at least 40 % oxyalkylated; at least 50 % oxyalkylated; at least 60 % oxyalkylated; at least 75 % oxyalkylated; at least 85 % oxyalkylated; even at least 90 % oxyalkylated. That is, in one embodiment, the modified novolac-type resin comprises 70 % or less, 60 % or less, 50 % or less, 40 % or less, 25 % or less, 15 % or less, or even 10 % or less of free phenolic hydroxyl groups present in the original phenolic resin. In one embodiment, the modified novolac-type resin comprises 0 % to 70 % of free phenolic hydroxyl groups present in the original phenolic resin; 5 % to 60 % phenolic hydroxyl groups present in the original phenolic resin; 10 % to 50 % phenolic hydroxyl groups present in the original phenolic resin; 15 % to 45 % phenolic hydroxyl groups present in the original phenolic resin; even 20 % to 40 % phenolic hydroxyl groups present in the original phenolic resin. Here as elsewhere in the specification and claims, numerical values may be combined to form new and non-disclosed ranges. As used herein, the percentage of free hydroxyl groups of the modified phenolic resin and the percentage of modification (e.g., the percentage to which the resin is oxyalkylated) is expressed in terms of molar or mol percent of the resin.

The phenolic resin is modified to provide primary hydroxyl groups,.The phenolic resin is modified to provide a phenolic resin where at least 50 %; at least 60 %; even at least 75 % of the phenolic hydroxyl groups that have been modified are primary alcohols. In one embodiment, the phenolic resin is modified to provide a phenolic resin where at least 50 % to at least 100 %, at least 60 % to at least 95 %, even to at least 75 % to at least 90 % of the phenolic hydroxyl groups have been modified to provide a primary alcohol. Modified novolac-type resins with terminal, primary hydroxyl groups may be provided in one aspect by modifying the phenol group with ethylene oxide, ethylene carbonate, or a combination thereof. In one embodiment, the novolac-type resin is modified to provide hydroxyl terminated resins with at least one secondary hydroxyl group.

In general, modified phenolic resins are provided such that the phenolic hydroxyl group has been modified with the alkylene oxide, alkylene carbonate, or both. The modified phenolic resin may be prepared by either first oxyalkylating a phenolic compound with an alkylene oxide, alkylene carbonate, or both, and then reacting the modified phenol with an aldehyde. Alternatively, the modified phenolic resin may be prepared by oxyalkylating the phenolic hydroxyl groups of an already formed novolac-type resin. According to the present invention, the phenolic resin is modified with an alkylene carbonate.

The alkylene carbonate or alkylene oxide react with the novolac to form a chemically modified-novolac polyol. The modified novolac polyol may be 100% alkyoxylated or comprise some phenolic hydroxyl groups. In embodiments, the modified-novolac polyol may be represented by the a compound of the formula: 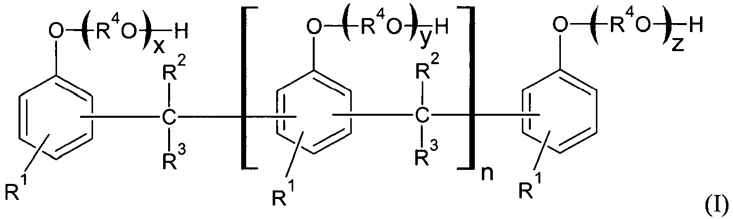 wherein n has an average value of 0.2 to 6;
x, y and z have values from 0 to 25 where x + y + z is greater than 0;
R¹ is independently selected from the group consisting of hydrogen or an alkyl group or a mixture of;
R² and R³ are independently selected from the group consisting of hydrogen and an alkyl group; and
R⁴ is independently chosen from an alkyl group. In embodiments, n maybe 0.5 to 4; x, y, and z are independently 1 to 10. The alkyl group R² and R³ maybe chosen from hydrogen or from a C1-C10 alkyl group. The C1-C10 alkyl group may be linear or branched. The alkyl group R⁴ may be chosen from a C1-C10 alkyl group or mixture of, and in embodiments from a C2-C4 alkyl group or mixture of.
In embodiments, the R⁴ alkyl group is such that the alkyoxylated resin comprises primary hydroxyl groups. In other embodiments, the R⁴ alkyl group may be such that the modified resin comprises secondary hydroxyl groups.

When a portion of the phenolic resin is not modified, x, y, and/or z will be equal to 0 or can have a fractional value below 1. It will be appreciated that where the modified phenolic resin is less than 100% alkyoxylated, the formula may further comprise un-modified phenolic resin groups: 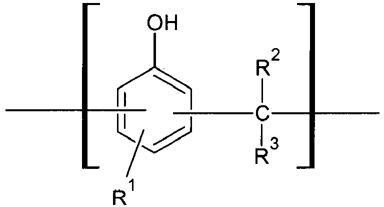 where R¹, R², and R³ may be as described above.

The following non-limiting examples illustrate various chemical structures of novolac polyols. It will be understood that ethylene and propylene oxides may be added to create longer chain alkoxy groups. In one embodiment, a modified-novolac polyol based on phenol, formaldehyde and ethylene carbonate or ethylene oxide may have the following structure where n may be as described above (100% alkoxylation): 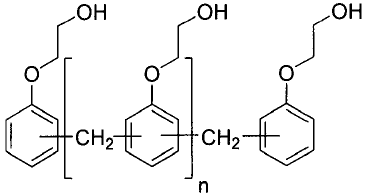 In one embodiment, a modified novolac polyol based on phenol, formaldehyde and propylene carbonate or propylene oxide may have the following structure where n may be as described above (100 % alkoxylation): 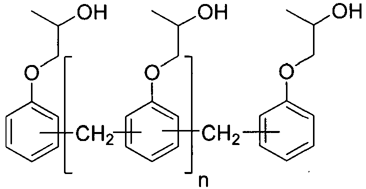 In one embodiment, a modified novolac polyol based on p-tert.butylphenol, formaldehyde and ethylene carbonate or ethylene oxide may have the following structure where n=1 and m=4 (< 100 % alkoxylation):

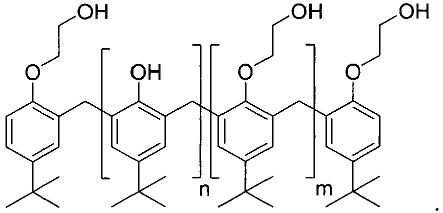

The chemically modified-novolac polyol may have an average hydroxyl functionality of from 1 to 20, from 3 to 17, from 7 to 14, even from 10 to 13. In one embodiment, the chemically modified-novolac polyol may have an average hydroxyl functionality of from 2 to 10. In one embodiment, chemically modified-novolac polyol may have an average hydroxyl functionality of from 3 to 8. Here as elsewhere in the specification and claims, numerical values may be combined to form new and non-disclosed ranges.

The foam composition may contain the modified phenolic resin in an amount of from 1 weight percent to 25 weight percent based on the total weight of the system; from 3 weight percent to 20 weight percent; even from 5 weight percent to 20 weight percent based on the total weight of the system. The total weight of the system is calculated by adding up the total weight of the composition minus the weight of the physical blowing agent. Here as elsewhere in the specification and claims, numerical values may be combined to form new and non-disclosed ranges.

The foam compositions also comprise the components or additives suitable for making a particular foam composition and particularly for making rigid polyurethane foams including a polyol component, an isocyanate component, and a catalyst.

The polyol component is not particularly limited and may be chosen as desired for a particular purpose or intended application. In various embodiments, the polyol may be chosen from polyester polyols, polyether polyols, polycarbonate polyols, hydroxyl-terminated polyolefin polyols etc., or a combination of two or more thereof. The polyols may be, for example, polyester diols, polyester triols, polyether diols, polyether triols, etc. Alternatively, the polyol may be selected from the group of polythioether polyols, polycaprolactones, brominated polyether polyols, acrylic polyols, etc., or a combination of two or more thereof. When high functionality polyether polyols are used, the high functionality polyether polyol may have a functionality from 3 to 6. Polyols such as sucrose or sorbitol initiators may be mixed with lower functionality glycols or amines to bring the functionality of the polyols in the 3.5 to 5 range.

Additionally, other particularly suitable polyols include aromatic polyester polyol. The aromatic polyester polyol may be prepared from substantially pure reactant materials or more complex starting materials, such as polyethylene terephthalate, may be used. Additionally, dimethyl terephthalate (DMT) process residues may be used to form aromatic polyester polyol.

The aromatic polyester polyol may comprise halogen atoms. It may be saturated or unsaturated. The aromatic polyester polyol may have an aromatic ring content (expressed as weight percent of groups containing at least one aromatic ring per molecule) that is at least 30 percent by weight, based on the total compound weight, at 35 percent by weight, even 40 percent by weight. Polyester polyols having an acid component that advantageously comprises at least 30 percent by weight of phthalic acid residues, or residues of isomers thereof, are particularly useful.

The aromatic polyester polyol may have a hydroxyl number of greater than 50 mg KOH/g, greater than 100 mg KOH/g, greater than 150 mg KOH/g, greater than 200 mg KOH/g, greater than 250 mg KOH/g, greater than 300 mg KOH/g, greater than 350 mg KOH/g, and even greater than 400 mg KOH/g. Here as elsewhere in the specification and claims, numerical values may be combined to form new and non-disclosed ranges.

In one embodiment, the aromatic polyester polyol has a functionality that is greater than 1, greater than 2, greater than 3, greater than 4, greater than 5, greater than 6, greater than 7, and even greater than 8. Here as elsewhere in the specification and claims, numerical values may be combined to form new and non-disclosed ranges.

The foam composition also includes an isocyanate composition. The isocyanate may include at least one isocyanate and may include more than one isocyanate. The isocyanate may be selected from an aromatic isocyanate, an aliphatic isocyanate, or any combination thereof. The isocyanate composition may include an aromatic isocyanate such as polymeric MDI. If the isocyanate composition includes an aromatic isocyanate, the aromatic isocyanate may correspond to the formula R⁵(NCO)z where R⁵ is a polyvalent organic radical which is aromatic and z is an integer that corresponds to the valence of R⁵. Generally, z is at least 2.

The isocyanate composition may include, but is not limited to, 1,4-diisocyanatobenzene, 1,3-diisocyanato-o-xylene, 1,3-diisocyanato-p-xylene, 1,3-diisocyanato-m-xylene, 2,4-diisocyanato-1-chlorobenzene, 2,4-diisocyanato-1-nitro-benzene, 2,5-diisocyanato-1-nitrobenzene, m-phenylene diisocyanate, p-phenylene diisocyanate, 2,4-toluene diisocyanate, 2,6-toluene diisocyanate, mixtures of 2,4- and 2,6-toluene diisocyanate, 1,5-naphthalene diisocyanate, 1-methoxy-2,4-phenylene diisocyanate, 4,4'-diphenylmethane diisocyanate, 2,4'-diphenylmethane diisocyanate, 4,4'-biphenylene diisocyanate, 3,3'-dimethyl-4,4'-diphenylmethane diisocyanate, and 3,3'-dimethyldiphenylmethane-4,4'-diisocyanate, triisocyanates such as 4,4',4"-triphenylmethane triisocyanate polymethylene polyphenylene polyisocyanate and 2,4,6-toluene triisocyanate, tetraisocyanates such as 4,4'-dimethyl-2,2'-5,5'-diphenylmethane tetraisocyanate, toluene diisocyanate, 2,2'-diphenylmethane diisocyanate, 2,4'-diphenylmethane diisocyanate, 4,4'-diphenylmethane diisocyanate, polymethylene polyphenylene polyisocyanate, corresponding isomeric mixtures thereof, and any combination thereof.

The foam composition also includes one or more catalysts, e.g., a gelation catalyst, a blowing catalyst, or a trimerization catalyst. Catalysts generally catalyze the reaction of the-polyol (the main polyol component and/or the modified or unmodified phenolic resin) and an isocyanate composition. Specifically, a gelation catalyst may catalyze the hydroxyl to isocyanate reaction to generate a urethane bond. A blowing catalyst may promote a water to isocyanate reaction to generate a urea bond. A trimerization catalyst may promote a reaction of three isocyanate groups to form an isocyanurate bond. The catalyst of the present technology may include one or more catalysts and typically includes a combination of catalysts. The catalyst may catalyze the exothermic reaction between the resin composition and the isocyanate composition. The catalyst is generally not consumed in the exothermic reaction. The catalyst may include any suitable catalyst or mixtures of catalysts known in the art. Examples of suitable catalysts include, but are not limited to, amine catalysts in appropriate diluents, e.g., bis(dimethylaminoethyl)ether in dipropylene glycol; and metal catalysts, e.g., tin, bismuth, lead, etc. If included, the catalyst may be included in various amounts. In one embodiment, the catalyst is selected from the group of, N,N-dimethylcyclohexylamine (DMCHA), N,N,N',N',N"-pentamethyldiethylenetriamine (PMDETA), amidines such as 2,3-dimethyl-3,4,5,6-tetrahydropyrimidine, tertiary amines such as triethylamine, tributylamine, dimethylbenzylamine, N-methylmorpholine, S-ethylmorpholine, N-cyclohexylmorpholine, N,N,N',N'-tetramethylethylenediamine, N,N,N',N'-tetramethylbutanediamine, N,N,N',N'-tetamethylhexane-1,6-diamine, pentamethyldiethylenetriamine, bis(dimethylaminoethyl)ether, bis(dimethylaminopropyl)urea dimethylpiperazine, 1,2-dimethylimidazole, 1-azabicyclo[3.3.0]octane and typically 1,4-diazabicyclo[2.2.2]octane, alkanolamine compounds such as triethanolamine, triisopropanolamine, N-methyldiethanolamine, N-ethyldiethanolamine, dimethylethanolamine, tris(dialkylaminoalkyl)-s-hexahydrotriazines, including tris(N,N-dimethylaminopropyl)-s-hexahydrotriazine, tetraalkylammonium hydroxides including tetramethylammonium hydroxide, alkali metal hydroxides including sodium hydroxide and potassium hydroxide, alkali metal alkoxides including sodium methoxide and potassium isopropoxide, alkali metal salts of long-chain fatty acids having from 10 to 20 carbon atoms and/or lateral hydroxyl groups, tin, iron, lead, bismuth, mercury, titanium, hafnium, zirconium, iron(II) chloride, zinc chloride, lead octoate stabilized stannous octoate, tin(II) salts of organic carboxylic acids such as tin(II) acetate, tin(II) octoate, tin(II) ethylhexanoate and tin(II) laurate, and dialkyltin(IV) salts of organic carboxylic acids such as dibutyltin dilaurate, dibutyltin diacetate, dibutyltin maleate and dioctyltin diacetate, potassium salts, potassium octoate, potassium acetate, and any combinations thereof. In various embodiments, the catalyst may be included in amounts of from 0.5 to 3, of from 0.5 to 8, of from 1 to 7, of from 3 to 5.5, even 3.5 to 4.5 weight percent of the foam composition.

The foam compositions also includes a surfactant. The surfactant may be a silicone silicone, a non-silicone surfactant, or a combination of both. Any surfactant known in the art may be used in the present invention. In one embodiment, the surfactant is selected from the group of silicone surfactants. Generally, silicone surfactants may control cell size, closed cell content and shape of the rigid foam produced from the reaction of the resin composition and isocyanate composition.

In one embodiment, the surfactant may include non-ionic surfactants, cationic surfactants, anionic surfactants, amphoteric surfactants, and combinations thereof. In various embodiments, the surfactant may include, but is not limited to, polyoxyalkylene polyol surfactants, alkylphenol ethoxylate surfactants, and combinations thereof. In one embodiment, the salts of sulfonic acids, e.g., alkali metal and/or ammonium salts of oleic acid, stearic acid, dodecylbenzene- disulfonic acid or dinaphthylmethane-disulfonic acid, and ricinoleic acid, foam stabilizers such as siloxaneoxyalkylene copolymers and other organopolysiloxanes, oxyethylated alkyl-phenols, oxyethylated fatty alcohols, paraffin oils, castor oil, castor oil esters, and ricinoleic acid esters, and cell regulators, such as fatty alcohols, dimethylpolysiloxanes, and combinations thereof. In one embodiment, the foam composition may include Niax^{®} L-6900.

The surfactant may be present in any appropriate amount. In various embodiments, the surfactant is present in amounts of from 0.5 to 3, of from 1 to 3, or in 2 weight percent of the foam composition.

The foam composition may also include a non-silicone surfactant. The non-silicone surfactant may be used with the silicone surfactants or alone. Any surfactant known in the art may be used in the present invention. As such, the surfactant may include non-ionic surfactants, cationic surfactants, anionic surfactants, amphoteric surfactants, and combinations thereof. In various embodiments, the surfactant may include, but is not limited to, polyoxyalkylene polyol surfactants, alkylphenol ethoxylate surfactants, and combinations thereof. If the surfactant is included in the resin composition, the surfactant may be present in any appropriate amount.

The foam composition also includes one or more blowing agents including, but not limited to, physical blowing agents, chemical blowing agents, or any combination thereof. In one embodiment, the blowing agent may include both a physical blowing agent and a co-chemical blowing agent, and the blowing agent may be included in the foam composition. The physical blowing agent does not typically chemically react with the resin composition and/or an isocyanate to provide a blowing gas. The physical blowing agent may be a gas or liquid. A liquid physical blowing agent may evaporate into a gas when heated, and may return to a liquid when cooled. The physical blowing agent may reduce the thermal conductivity of the rigid polyurethane foam. The blowing agent may include, but is not limited methylene chloride, acetone, and liquid carbon dioxide, aliphatic and/or cycloaliphatic hydrocarbons such as halogenated hydrocarbons and alkanes, acetals, water, alcohols, glycerol, formic acid, and any combination thereof. In embodiments, the composition comprises a chemical blowing agent chosen from water, formic acid, or a combination thereof.

In various embodiments, the blowing agent may be selected from pentane isomers, hydrofluorocarbon, volatile non-halogenated C2-C7 hydrocarbons such as alkanes, including N-pentane, alkenes, cycloalkanes having up to 6 carbon atoms, dialkyl ether, cycloalkylene ethers and ketones, and hydro fluorocarbons, C1-C4 hydrofluorocarbons, volatile non-halogenated hydrocarbon such as linear or branched alkanes such as butane, isobutane, 2,3-dimethylbutane, n- and isopentanes, n- and isohexanes, n- and isoheptanes, n- and isooctanes, n- and isononanes, n- and isodecanes, n- and isoundecanes, and n- and isodedecanes, alkenes such as 1-pentene, 2-methylbutene, 3-methylbutene, and 1-hexene, cycloalkanes such as cyclobutane, cyclopentane, and cyclohexane, linear and/or cyclic ethers such as dimethyl ether, diethyl ether, methyl ethyl ether, vinyl methyl ether, vinyl ethyl ether, divinyl ether, tetrahydrofuran and furan, ketones such as acetone, methyl ethyl ketone and cyclopentanone, isomers thereof, hydrofluorocarbons such as difluoromethane (HFC-32), 1,1,1,2-tetrafluoroethane (HFC-134a), 1,1,2,2-tetrafluoroethane (HFC-134), 1,1-difluoroethane (HFC-152a), 1,2-difluoroethane (HFC-142), trifluoromethane, heptafluoropropane (R-227a), hexafluoropropane (R-136), 1,1,1-trifluoro ethane, 1,1,2-trifluoroethane, fluoroethane (R-161), 1,1,1,2,2-pentafluoropropane, pentafluoropropylene (R-2125a), 1,1,1,3-tetrafluoropropane, tetrafluoropropylene (R-2134a), difluoropropylene (R-2152b), 1,1,2,3,3-pentafluoropropane, 1,1,1,3,3-pentafluoro-n-butane, and 1,1,1,3,3-pentafluoropentane (245fa), isomers thereof, 1,1,1,2-tetrafluoroethane (HFC-134a), isomers thereof, and combinations thereof. In various embodiments, the blowing agent may be further defined as 1,1,1,3,3-pentafluoropentane (245fa) or a combination of HFC 245fa, 365MFC, 227ea, and 134a. In an alternative embodiment, the blowing agent may be further defined as 365 MFC, which may be blended with 227ea.

In various embodiments, the blowing agent may be present in amounts of from 0.1 to 20, of from 1 to 18, of from 4 to 16, of from 7 to 14, of from 9 to 12, or of from 10 to 11 weight percent of the foam composition. Generally, the amount of the blowing agent and/or water may be selected based on a desired density of the rigid foam and solubility of the blowing agent in the resin composition. It may be desirable to minimize amounts of the blowing agent used to reduce costs.

The foam composition may also include a cross-linker and/or a chain extender. The cross-linker may include, but is not limited to, an additional polyol, amines, and any combination thereof. If the cross-linker is included in the foam composition, the cross-linker may be present in any appropriate amount. Chain extenders contemplated for use in the present technology include, but not limited to, hydrazine, primary and secondary diamines, alcohols, amino acids, hydroxy acids, glycols, and combinations thereof. Specific chain extenders that are contemplated for use include, but are not limited to, mono and di-ethylene glycols, mono and di-propylene glycols, 1,4-butane diol, 1,3-butane diol, propylene glycol, dipropylene glycol, diethylene glycol, methyl propylene diol, mono, di- and tri-ethanolamines, N-N'-bis-(2 hydroxy-propylaniline), trimethylolpropane, glycerine, hydroquinone bis(2-hydroxyethyl)ether, 4,4'-methylene-bis(2-chloroaniline, diethyltoluenediamine, 3,5-dimethylthio-toluenediamine, hydrazine, isophorone diamine, adipic acid, silanes, and any combinations thereof.

The foam composition may also include one or more additives. Suitable additives include, but are not limited to, non-reactive fire retardants (e.g., various phosphates, various phosphonates, triethylphosphate, trichloropropylphosphate, triphenyl phosphate, or diethylethylphosphonate, tris(2-chloroethyl)phosphate, tris-ethyl- phosphate, tris(2-chloro-propyl)phosphate, tris(1 ,3-dichloropropyl)phosphate, diammonium phosphate, various halogenated aromatic compounds, antimony oxide, alumina trihydrate, polyvinyl chloride, and any combinations thereof), OH-free/non-reactive fire retardants, chain terminators, inert diluents, amines, anti-foaming agents, air releasing agents, wetting agents, surface modifiers, waxes, inert inorganic fillers, molecular sieves, reactive inorganic fillers, chopped glass, other types of glass such as glass mat, processing additives, surface-active agents, adhesion promoters, anti-oxidants, dyes, pigments, ultraviolet light stabilizers, thixotropic agents, anti-aging agents, anti-static additives,lubricants, coupling agents, solvents, rheology promoters, cell openers, release additives, and combinations thereof. The one or more additives may be present in the foam composition in any amount.

In addition to the foam composition, this technology also provides a method of forming the foam, and a method of forming the foam on a surface.

The method of forming the rigid foam typically includes the step of combining the modified novolac resin, the polyol, and the isocyanate composition.The polyol and the isocyanate composition are combined such that the isocyanate index is 250 or less. In embodiments, the isocyanate index is 225 or less; 200 or less; 150 or less; 125 or less; 100 or less; even 90 or less. In embodiments, the isocyanate index is from 90 to 250, from 95 to 240, from 100 to 200, from 115 to 180, even 125 to 165. In one embodiment, the the isocyanate index is from 90 to 225; even from 100 to 200. It will be appreciated by those skilled in the art that the foam may be a polyurethane foam or a polyisocyanurated foam. Foams in which the isocyanate index is 250 are typically in the category of polyisocyanurate foams. It will be appreciated, however, that there is not an absolute value for the index to delineate a polyurethane foam from a polyisocyanurate foam.

The method of forming the rigid foam on the surface may include the steps of combining the components to form a foam mixture. Generally, the step of combining may occur in a mixing apparatus such as a static mixer, impingement mixing chamber, or a mixing pump. In one embodiment, the step of mixing occurs in a static mixing tube. Alternatively, the foam composition and the isocyanate composition may be combined in a spray nozzle.

In one embodiment, the components are combined with a stream of air typically having a pressure of from 0.07 to 0.34 bar (1 to 5 psi). The isocyanate composition may be combined with the stream of air before being combined with the foam composition. Alternatively, the polyol and the modified novolac-type resin may be combined with the stream of air before being combined with the isocyanate composition. Further, the components may be combined simultaneously with the stream of air. The stream of air is thought to aid in mixing and promote even spraying and distribution of the foam mixture.

The components may be combined while on a surface or apart from the surface. In one embodiment, the components may be combined in the head of a spray gun or in the air above the surface to which the composition is being applied. The components may be combined and applied to the surface by any method known in the art including spraying, dipping, pouring, coating, painting, etc.

The present technology provides a rigid polyurethane foam ("rigid foam"). The rigid foam may be open or closed celled and may include a highly cross-linked, polymer structure that allows the foam to have good heat stability, high compression strength at low density, low thermal conductivity, and good barrier properties. Typically, the rigid foam of this technology may have glass transition temperature greater than room temperature (approximately 23 °C +/- 2 °C (approximately 73.4 °F +/- 3.6 °F)) and is typically rigid at room temperature. Generally, foams are rigid at or below their glass transition temperatures especially in glassy regions of their storage moduli. The rigid foam may have density of from 10 to 1,100 kg/m³, from 50 to 1,000 kg/m³, from 100 to 850 kg/m³, from 250 to 650 kg/m³, even from 350 to 500 kg/m³. In one embodiment, the rigid foam may have density of from 10 to 50 kg/m³,

The foam mixture may be applied to any appropriate surface, e.g., brick, concrete, masonry, dry-wall, sheetrock, plaster, metal, stone, wood, plastic, a polymer composite, or any combination thereof. Additionally, the surface may be a surface of a mold and, therefore, the rigid foam may be formed in the mold.

The resulting rigid foam may be used in the form of a slabstock, a molding, or a filled cavity. The filled cavity, e.g., may be a pipe, insulated wall, insulated hull structure. The rigid foam may be a sprayed foam, a frothed foam, or a continuously- manufactured laminate product or discontinuously-manufactured laminate product, including but not limited to a laminate or laminated product formed with other materials, such as hardboard, plasterboard, plastics, paper, metal, or a combination thereof.

The foam mixture may be sprayed at a spray rate of from 0.45 to 13.61 kg/min (1 to 30 lbs/min), at a rate of from 2.27 to 11.34 kg/min (5 to 25 lbs/min), and even at a rate of from 2.27 to 9.07 kg/min (5 to 20 lbs/min). Also, the foam mixture may generally be sprayed at a pressure of less than 207 bar (3000 psi).

In various embodiments, the foam mixture may be sprayed in a single pass such that the rigid foam being formed therefrom has a (single pass) thickness of from 2.54 to 25.4 cm (1 to 10 inches), from 5.08 to 20.32 cm (2 to 8 inches), from 7.62 to 17.78 cm (3 to 7 inches), from 10.16 to 15.24 cm (4 to 6 inches), from 10.16 to 12.7 cm (4 to 5 inches), or even from 15.24 to 22.86 cm (6 to 9 inches), with minimal or no visible discoloration and/or scorch. Here as elsewhere in the specification and claims, numerical values may be combined to form new and non-disclosed ranges.

Rigid foams prepared according to embodiments of the present technology may show improved processability compared to foams without the modified phenolic resin additives disclosed herein. The present foam may exhibit reduced defects, including, but not limited to, decreased shrinkage and deformation. This characteristic may be useful in the manufacture of sandwich panels. Sandwich panels may comprise at least one relatively planar layer (i.e., a layer having two generally large dimensions and one generally small dimension) of the rigid foam, faced on each of its larger dimensioned sides with at least one layer, per such side, of flexible or rigid material, such as a foil or a thicker layer of a metal or other structure-providing material. Such a layer may, in certain embodiments, serve as the substrate during formation of the foam.

Additionally, the foam mixture produced in the method described above from the above-identified components may have improved thermal conductivity. In particular, the present compositions employing a modified phenolic resin, such as a modified novolac resin with terminal, primary hydroxyl groups, may reduce the thermal conductivity of the foam composition relative to a similar foam composition that is devoid of the modified novolac resin. In one embodiment, the foam may have an initial thermal conductivity of 25 mW/m•K or less; to 24 mW/m•K or less; 23 mW/m•K or less; 22 mW/m•K or less; 21 mW/m•K or less; even 20 mW/m•K or less as measured between between 10 °C and 36 °C temperatures. For example, in one embodiment, using 15% of the chemically-modified novolac resin over the total foam composition excluding physical blowing agent resulted in a benefit of above 0.8 mW/m•K for initial thermal conductivity.

Rigid foams comprising the foam compositions described above may be further understood with reference to the following examples.

### EXAMPLES

Rigid polyurethane foams were prepared according to the formulations described in the table below. The foams were prepared by first making a resin blend comprising the different polyols, fire retardant, catalysts, water, surfactants, and the phenolic resin when appropriate in a 1 liter plastic cup. An appropriate weight was used to obtain a sufficient mold filling, in the reported experiments a multiplication factor of 1.7 was used versus the formulation of Table 2 to obtain the required grams of ingredients to use. Pentane was used as physical blowing agent and was added to this resin blend to the target weight, then the mixture was gently mixed with a spatula until a homogeneus pre-mix blend was achieved. Additional pentane was added to correct for the small quantity lost from evaporation during the mixing. This procedure was repeated until the required weight was reached and maintained stable.

The required amount of isocyanate was pre-weighted in another cup and was quickly added to the cup containing the polyol-pentane pre-mix. This reactive blend was further mixed at 4000 rpm for 5 seconds using a high energy mechanical mixer equipped with a 6 cm circular propeller. The reactive mix was immediately poured along one side of a square metal mold of 30 cm x 30 cm with 6 cm thickness and Cream Time was measured. The mold was pre-heated to 45 °C at least 1 hour before the mixing and its internal faces were covered with gas tight aluminum facings prior to the weighing of the chemicals. The mold was closed and the foam expanded from the pour side towards the opposite side of the mold as main flow direction. A rigid foam block covered with the facings was obtained after demolding at 15 minutes. Gel time was measured from the remaining reactive material in the cup.

The foam block was kept for 24 hours with the facing on it at room temperature. A piece for thermal conductivity measurement was then cut from the center of the block of dimension 20 cm x 20 cm x 4 cm. This piece was used for core foam density measurements and for thermal conductivity measurements between 10 °C and 36 °C using a FOX Lasercomp 200 heat flow meter. The recorded value is referred to as the initial thermal conductivity.

A second comparable block is produced for compression measurements. From this block, four (4) core foam pieces of 5 cm x 5 cm x 5 cm dimensions were cut from the middle of the block after at least 48 hours curing time at room temperature. Two of these were tested for compression along an axis parallel to the flow direction defined as being from the pour side to the opposite side of the block. The other two were tested for compression along an axis perpendicular to the flow. The compression hardness or compressive strength was recorded as the 10 % compression force and expressed in kPa, an average compression values of the two pieces is reported for each direction of testing.

The control foam composition did not include any modified novolac resin. Examples 1, 2 and 4 and Refernce Examples 3 and 5 include a modified novolac-type resin where greater than 90 % of the phenolic hydroxyl groups have been modified. Examples 1,2 and 4 and Reference Example 3 employ ethylene oxide or ethylene carbonate to provide a modified novolac with primary hydroxyls. Reference Example 5 used a novolac modified with propylene oxide to give a novolac with a secondary hydroxyl. Table 1 identifies properties of the modified phenolic resins.

**Table 1**

| | **Phenolic Resin Before Modification** | | **Modification Type** | **Diluent** | **Resulting Resin Composition** | |
|---|---|---|---|---|---|---|
| | OH functionality | Averaged Molecular Mn (g/mol) | | | OH value (mg KOH/g) | TEP content (%) |
| Modified Ph. Resin mix 1 | 3 | 314 | ethylene carbonate adduct | TEP | 290 | 27.6 |
| Modified Ph. Resin mix 2 | 3 | 314 | ethylene carbonate adduct | TEP | 290 | 27 |
| Modified Ph. Resin mix 3 | 3 | 314 | ethylene oxide adduct | TEP | 261 | 42.4 |
| Modified Ph. Resin mix 4 | 6 | 630 | ethylene carbonate adduct | TEP | 250 | 40 |
| Modified Ph. Resin mix 5 | 3 | 314 | propylene oxide adduct | TEP | 232 | 34.1 |

**Table 2**

| | **Control Foam** | **Example 1 (EC >90%)** | **Example 2 (EC >90%)** | **Reference Example 3 (EC >90%)** | **Example 4 (EC >90%)** | **Reference Example 5 (EC >90%)** |
|---|---|---|---|---|---|---|
| **Formulation** | | | | | | |
| Polyether polyol (Voranol^{®} RN 411) | 37.4 | 31.7 | 31.6 | 30.8 | 8.4 | 32.7 |
| Polyester polyol (Stepanpol^{®} PS 2412) | 9.3 | 7.9 | 7.9 | 7.7 | 33.6 | 8.2 |
| Brominated polyether polyol (Ixol^{®} B251) | 23.4 | | | | | |
| Triethylphosphate (TEP) | 23.4 | 11.5 | 11.9 | 0.0 | 2.1 | 6.9 |
| Catalyst 1: DMCHA (Niax^{®} C-8) | 2.8 | | | | | |
| Catalyst 2: PMDETA (Niax^{®} C-5) | | 0.48 | 0.40 | 0.38 | 0.42 | 0.41 |
| Catalyst 3: Niax^{®} K-Octoate | 0.9 | 0.8 | 0.8 | 0.8 | 0.8 | 0.8 |
| Water | 0.9 | 0.8 | 0.8 | 0.8 | 0.8 | 0.8 |
| Surfactant: Niax^{®} L-6900 | 1.9 | 1.6 | 1.6 | 1.5 | 1.7 | 1.6 |
| Novolac resin 1 (27.6% TEP) | | 45.2 | | | | |
| Novolac resin 2 (27% TEP) | | | 45.1 | | | |
| Novolac resin 3 (42.4% TEP) | | | | 58.1 | | |
| Novolac resin 4 (40 % TEP) | | | | | 52.1 | |
| Novolac resin 5 (34.1% TEP) | | | | | | 48.6 |
| **Total polyol component** | 100.0 | 100.0 | 100.0 | 100.0 | 100.0 | 100.0 |
| Blowing agent (N-pentane) | 7.3 | 7.5 | 7.5 | 7.7 | 7 | 7.3 |
| Suprasec^{®} 2085 (polymeric MDI isocyanate) | 108.4 | 115.1 | 114.6 | 120 | 105 | 110.2 |
| **Isocyanate index** | 140 | 140 | 140 | 140 | 140 | 140 |
| % Liquid FR/total system | 11.2 | 11.2 | 11.2 | 11.2 | 11.2 | 11.2 |
| % Phenolic Resin/total system | 0 | 15.2 | 15.3 | 15.2 | 15.3 | 15.3 |
| % Phenolic Resin/polyol mixture | 0 | 32.8 | 32.9 | 33.5 | 31.3 | 32.0 |

| **Reactivity** | | | | | | |
|---|---|---|---|---|---|---|
| Cream Time (s) | 8 | 9 | 10 | 10 | 10 | 10 |
| Gel time (s) | 38 | 39 | 40 | 42 | 41 | 44 |
| | | | | | | |

| **Foam properties** | | | | | | |
|---|---|---|---|---|---|---|
| Core density molded panel (kg/m³) | 54.2 | 53.6 | 54.6 | 56.9 | 53.6 | 52.3 |
| | | | | | | |
| **Initial thermal conductivity** | | | | | | |
| Lambda 10 - 36°C (mW/m•K) | 23.85 | 23.09 | 22.93 | 22.57 | 21.94 | 23.65 |
| | | | | | | |
| **Compressive strength 10% (kPa)** | | | | | | |
| Parallel to flow | 275 | 314 | 330 | 388 | 417 | 278 |
| Perpendicular to flow | 298 | 323 | 368 | 330 | 232 | 276 |

The data in Tables 1 and 2 shows a number of formulations and their chemical properties.

## Claims

1. A polyurethane or polyisocyanurate foam composition comprising:
a polyol or a mixture thereof;
an isocyanate;
a polyurethane catalyst or a mixture thereof;
a modified phenolic resin, the modified phenolic resin being an oxyalkylated phenolic resin in which at least 50 mol %, preferably 75 mol % or greater, of the phenolic hydroxyl groups have been modified to provide primary hydroxyl groups, wherein the phenolic resin is modified with an alkylene carbonate; and the composition has an isocyanate index of about 250 or less;
a surfactant;
one or more blowing agents chosen from a physical blowing agent or a mixture thereof, a chemical blowing agent or a mixture thereof, or any combination thereof; and
optionally, a fire retardant additive or a mixture thereof.

2. The foam composition of claim 1, where the modified phenolic resin is modified with ethylene carbonate.

3. The foam composition of claim 1, where the modified phenolic resin has less than 50 mol %, preferably less than 25 mol %, more preferably less than 10 mol %, of free phenolic hydroxyl groups.

4. The foam composition of any of claims 1-3, further comprising the modified phenolic resin in an amount of from 1 weight percent to 25 weight percent, preferably in an amount of from 3 weight percent to 20 weight percent, based on the total weight of the composition excluding the physical blowing agent.

5. The foam composition of any of claims 1-4, where the composition has an isocyanate index of 200 or less.

6. The foam composition of any claims 1-5, where the polyol is selected from a polyester polyols, polyether polyols, polycarbonate polyols, polythioether polyols, polycaprolactones, brominated polyether polyols, acrylic polyols, or a combination of two or more thereof.

7. The foam composition of any of claims 1-6, where the catalyst is selected from a gelation catalyst, a blowing catalyst, and a trimerization catalyst.

8. The foam composition of any of claims 1-7 comprising (i) a physical blowing agent selected from a pentane isomer, a hydrofluorocarbon, a hydrofluoroolefin, a hydrochlorofluorocarbon, or a combination of two or more thereof; (ii) a chemical blowing agent selected from water, formic acid, or a combination of two or more thereof; or both (i) and (ii).

9. The foam composition of any of claims 1-8, where the isocyanate composition is selected from an aromatic isocyanate, an aliphatic isocyanate, or any combination thereof.

10. A polyurethane foam formed from the foam composition of any of claims 1-9.

11. The polyurethane foam of claim 10, wherein a foam block was kept for 24 hours with a facing on it at room temperature and a piece for thermal conductivity measurement was cut from the center of the block of dimension 20 cm x 20 cm x 4 cm, where the piece of foam has an initial thermal conductivity of 23 mW/m•K or less, preferably of 22 mW/m•K or less, at a temperature between 10 °C and 36 °C using a FOX Lasercomp 200 heat flow meter.

12. An article comprising the polyurethane foam of claim 10 or 11.

13. A method of forming a polyurethane foam comprising reacting the composition of any of claims 1-9 to form a foam.

## Patentansprüche

1. Polyurethan- oder Polyisocyanuratschaumzusammensetzung, umfassend:
ein Polyol oder ein Gemisch davon;
ein Isocyanat;
ein Polyurethan-Katalysator oder ein Gemisch davon;
ein modifiziertes Phenolharz, wobei das modifizierte Phenolharz ein oxyalkyliertes Phenolharz ist, worin mindestens 50 mol-%, vorzugsweise 75 mol-% oder mehr, der phenolischen Hydroxylgruppen modifiziert worden ist, um primäre Hydroxylgruppen bereitzustellen, wobei das Phenolharz mit einem Alkylencarbonat modifiziert worden ist; und die Zusammensetzung einen Isocyanat-Index von etwa 250 oder weniger aufweist;
ein grenzflächenaktives Mittel;
ein oder mehrere Treibmittel, ausgewählt aus einem physikalischen Treibmittel oder einem Gemisch davon, einem chemischen Treibmittel oder einem Gemisch davon oder jedweder Kombination davon; und
gegebenenfalls ein flammhemmendes Additiv oder ein Gemisch davon.

2. Schaumzusammensetzung gemäß Anspruch 1, wobei das modifizierte Phenolharz mit Ethylencarbonat modifiziert worden ist.

3. Schaumzusammensetzung gemäß Anspruch 1, wobei das modifizierte Phenolharz weniger als 50 mol-%, vorzugsweise weniger als 25 mol-%, mehr bevorzugt weniger als 10 mol-%, an freien phenolischen Hydroxylgruppen aufweist.

4. Schaumzusammensetzung gemäß einem der Ansprüche 1 bis 3, weiter umfassend das modifizierte Phenolharz in einer Menge von 1 Gew.-% bis 25 Gew.-%, vorzugsweise in einer Menge von 3 Gew.-% bis 20 Gew.-%, bezogen auf das Gesamtgewicht der Zusammensetzung, ausgeschlossen das physikalische Treibmittel.

5. Schaumzusammensetzung gemäß einem der Ansprüche 1 bis 4, wobei die Zusammensetzung einen Isocyanat-Index von 200 oder weniger aufweist.

6. Schaumzusammensetzung gemäß einem der Ansprüche 1 bis 5, wobei das Polyol aus Polyesterpolyolen, Polyetherpolyolen, Polycarbonatpolyolen, Polythioetherpolyolen, Polycaprolactonen, bromierten Polyetherpolyolen, acrylischen Polyolen oder einer Kombination von zwei oder mehreren davon ausgewählt ist.

7. Schaumzusammensetzung gemäß einem der Ansprüche 1 bis 6, wobei der Katalysator aus einem Gelierungskatalysator, einem Treibkatalysator und einem Trimerisationskatalysator ausgewählt ist.

8. Schaumzusammensetzung gemäß einem der Ansprüche 1 bis 7, umfassend (i) ein physikalisches Treibmittel, ausgewählt aus einem Pentan-Isomer, einem Hydrofluorkohlenstoff, einem Hydrofluorolefin, einem Hydrochlorfluorkohlenstoff oder einer Kombination von zwei oder mehreren davon; (ii) ein chemisches Treibmittel, ausgewählt aus Wasser, Ameisensäure oder eine Kombination von zwei oder mehreren davon, oder sowohl (i) als auch (ii).

9. Schaumzusammensetzung gemäß einem der Ansprüche 1 bis 8, wobei die Isocyanatzusammensetzung aus einem aromatischen Isocyanat, einem aliphatischen Isocyanat oder einer Kombination davon ausgewählt ist.

10. Polyurethanschaum, gebildet aus der Schaumzusammensetzung gemäß einem der Ansprüche 1 bis 9.

11. Polyurethanschaum gemäß Anspruch 10, wobei ein Schaumblock mit einer Deckschicht darauf bei Raumtemperatur gehalten wurde und ein Stück zur Messung der thermischen Leitfähigkeit aus der Mitte des Blocks mit Dimensionen von 20 cm x 20 cm x 4 cm ausgeschnitten wurde, wobei das Schaumstück eine anfängliche thermische Leitfähigkeit von 23 mW/m·K oder weniger, vorzugsweise 22 mW/m·K oder weniger, bei einer Temperatur zwischen 10°C und 36°C unter Verwendung eines FOX Lasercomp 200 Wärmeflussmessgeräts aufweist.

12. Gegenstand, umfassend den Polyurethanschaum gemäß Anspruch 10 oder 11.

13. Verfahren zur Bildung eines Polyurethanschaums, umfassend das Reagieren der Zusammensetzung gemäß einem der Ansprüche 1 bis 9 unter Bildung eines Schaums.

## Revendications

1. Composition de mousse de polyuréthanne ou de polyisocyanurate, comprenant :
un polyol ou un mélange de polyols ;
un isocyanate ;
un catalyseur ou mélange de catalyseurs de polyuréthanne ;
une résine phénolique modifiée, la résine phénolique modifiée étant une résine phénolique oxyalkylée, dans laquelle au moins 50% en moles, de préférence 75% en moles ou plus, des groupes hydroxyle phénoliques ont été modifiés pour donner des groupes hydroxyle primaires, où la résine phénolique est modifiée avec un carbonate d'alkylène ; et la composition présente un indice d'isocyanate d'environ 250 ou moins ;
un tensioactif ;
un ou plusieurs agents gonflants choisis parmi les agents gonflants physiques ou leurs mélanges, les agents gonflants chimiques ou leurs mélanges, ou toute combinaison de ceux-ci ; et
le cas échéant, un additif retardateur de flamme ou un mélange de tels additifs.

2. Composition de mousse selon la revendication 1, dans laquelle la résine phénolique modifiée est modifiée avec le carbonate d'éthylène.

3. Composition de mousse selon la revendication 1, dans laquelle la résine phénolique modifiée a moins de 50% en moles, de préférence moins de 25% en moles, de manière plus préférée moins de 10% en moles de groupes hydroxyle phénoliques libres.

4. Composition de mousse selon l'une quelconque des revendications 1 à 3, comprenant en outre, la résine phénolique modifiée en une quantité allant de 1% en poids à 25% en poids, de préférence en une quantité allant de 3% en poids à 20% en poids, sur base du poids total de la composition, à l'exclusion de l'agent gonflant physique.

5. Composition de mousse selon l'une quelconque des revendications 1 à 4, où la composition présente un indice d'isocyanate de 200 ou moins.

6. Composition de mousse selon l'une quelconque des revendications 1 à 5, où le polyol est choisi parmi les polyester-polyols, les polyéther-polyols, les polycarbonate-polyols, les polythioéther-polyols, les polycaprolactones, les polyéther-polyols bromés, les polyols acryliques, ou une combinaison de deux ou plusieurs de ceux-ci.

7. Composition de mousse selon l'une quelconque des revendications 1 à 6, où le catalyseur est choisi parmi un catalyseur de gélification, un catalyseur de gonflement et un catalyseur de trimérisation.

8. Composition de mousse selon l'une quelconque des revendications 1 à 7, comprenant (i) un agent gonflant physique choisi parmi un isomère du pentane, un hydrofluorocarbone, une hydrofluorooléfine, un hydrochlorofluorocarbone, ou une combinaison de deux ou plusieurs de ceux-ci ; (ii) un agent gonflant chimique choisi parmi l'eau, l'acide formique ou une combinaison de deux ou plusieurs de ceux-ci ; ou à la fois (i) et (ii).

9. Composition de mousse selon l'une quelconque des revendications 1 à 8, où la composition d'isocyanate est choisie parmi un isocyanate aromatique, un isocyanate aliphatique ou toute combinaison de ceux-ci.

10. Mousse de polyuréthanne formée à partir de la composition de mousse selon l'une quelconque des revendications 1 à 9.

11. Mousse de polyuréthanne selon la revendication 10, dans laquelle un bloc de mousse est maintenu pendant 24 heures avec un frontal à température ambiante et un morceau pour la mesure de la conductibilité thermique est découpé dans le centre du bloc de dimensions 20 cm x 20 cm x 4 cm, le morceau de mousse ayant une conductibilité thermique initiale de 23 mW/m.K ou moins, de préférence de 22 mW/m.K, à une température située dans l'intervalle allant de 10°C à 36°C au moyen d'un capteur de flux thermique FOX Lasercomp 200.

12. Article comprenant la mousse de polyuréthanne selon la revendication 10 ou 11.

13. Procédé de production d'une mousse de polyuréthanne, comprenant la réaction de la composition selon l'une quelconque des revendications 1 à 9 pour former une mousse.
